# FASCICULE DE BREVET EUROPEEN

(11) **EP 1 207 966 B1**
(45) Date de publication et mention de la délivrance du brevet: **24.09.2003**
(21) Numéro de dépôt: 00958681.9
(22) Date de dépôt: 11.08.2000
(51) Int. Cl.: B05B 15/02

(54) **DISPOSITIF DE PROJECTION DE PRODUIT DE REVETEMENT COMPRENANT AU MOINS UN PROJECTEUR ET UN RESERVOIR A PISTON**
BESCHICHTUNGSMITTELSPRÜHEINRICHTUNG MIT MINDESTENS EINER SPRÜHDÜSE UND EINEM KOLBENSPEICHER
DEVICE FOR SPRAYING A COATING PRODUCT COMPRISING AT LEAST A SPRAYER AND A PISTON RESERVOIR

(30) Priorité: 30.08.1999 FR 9910994
(43) Date de publication de la demande: 29.05.2002
(73) Titulaire: SAMES Technologies, 38240 Meylan (FR)
(72) Inventeur: THOME, Caryl, F-38120 Saint Egrève (FR); PROVENAZ, Philippe, F-38100 Grenoble (FR); SENTIS, Louis, F-38000 Grenoble (FR)
(74) Mandataire: Myon, Gérard Jean-Pierre
(86) Numéro de dépôt international: FR0002315
(87) Numéro de publication internationale: WO01015816

(56) Documents cités:
- FR-A- 2 722 432
- GB-A- 2 252 796
- US-A- 3 381 861

## Description

L'invention a trait à un dispositif de projection de produit de revêtement comprenant au moins un projecteur et un réservoir à piston.

Il est connu d'utiliser des projecteurs de produit de revêtement embarqués sur des robots ou automates, ces projecteurs étant déplacés en regard des objets à revêtir. Pour certaines applications, et notamment pour les produits de revêtement hydrosolubles, il est connu, notamment de EP-A-0 274 322, d'embarquer un réservoir de produit de revêtement à l'extrémité du bras d'un robot pour alimenter un ou plusieurs projecteurs. Lorsque la quasi-totalité du produit contenu dans le réservoir a été consommée, il est nécessaire de nettoyer ce réservoir et de le remplir à nouveau.

Le réservoir peut inclure un piston dont le déplacement permet de chasser le produit de revêtement en direction du projecteur.

La précision obtenue pour le débit de produit de revêtement en cours de projection dépend essentiellement de la précision de la commande en déplacement du piston à l'intérieur du réservoir. Les systèmes comprenant un piston commandé par une tige sont plus précis que les systèmes à commande pneumatique ou hydraulique qui comportent nécessairement un régulateur de pression constituant un volume mort qui doit être nettoyé et induit des pertes de produit de revêtement.

Au terme de l'utilisation du produit de revêtement contenu dans le réservoir, le piston est à proximité immédiate du fond du réservoir puisque l'essentiel du produit a été consommé. Si le piston est plaqué contre ce fond, pour purger le reliquat de produit de revêtement, l'introduction d'un produit de nettoyage dans le réservoir tangentiellement à la face avant du piston n'est plus possible, de sorte que cette face avant demeure souillée du produit de revêtement utilisé précédemment. Si le piston n'est pas plaqué contre le fond du réservoir afin de permettre un mouvement tourbillonnaire du produit de nettoyage, un volume de produit de revêtement correspondant est perdu lors de chaque opération du nettoyage/remplissage, ce qui grève d'autant le coût d'exploitation de l'installation. En outre, une partie du produit de nettoyage n'est utilisée que pour évacuer ce reste de produit de revêtement et non pour nettoyer effectivement la face avant du piston, ce qui correspond à un surcoût supplémentaire.

Par la demande de brevet français 2 722 432, il est connu d'utiliser une tige susceptible d'être désolidarisée mécaniquement du piston ou de ses moyens d'entraînement en translation lors du nettoyage ou du remplissage du réservoir, ce qui permet un mouvement de recul de la face avant du piston lors de l'introduction sous pression d'un produit de nettoyage. Cette solution est avantageuse mais nécessite des moyens d'entraînement élaborés qui incluent un système de contrôle en position, afin de permettre un recul, avec une course faible mais précisément contrôlée, de ces moyens par rapport au piston.

L'invention vise à proposer une solution alternative aux problèmes identifiés ci-dessus qui ne nécessite pas de désolidariser mécaniquement le piston de ses moyens d'entraînement.

Dans cet esprit, l'invention concerne un dispositif de projection de produit de revêtement comprenant au moins un projecteur et un réservoir à piston, le piston étant commandé en déplacement par une tige d'actionnement alors que le fond du réservoir est relié par au moins un canal à une alimentation en produit de nettoyage et/ou en nouveau produit, caractérisé en ce qu'il comprend un module, élastiquement déformable en compression, intégré dans la liaison cinématique entre la tige et le piston ou entre la tige et ses moyens d'entraînement, ce module permettant un mouvement de recul du piston lors de l'introduction de produit dans le réservoir à partir dudit canal et en direction de la face avant du piston.

Grâce à l'invention, une certaine "élasticité" est conférée au positionnement du piston lorsqu'il est en appui contre le fond du réservoir, cette élasticité pouvant être mise à profit pour créer un espace de circulation de produit de nettoyage dont la pression d'injection dans le réservoir permet de comprimer le module élastique déformable. En d'autres termes, le piston est susceptible d'un léger débattement qui libère un espace de circulation du produit de nettoyage. En outre, le dispositif de l'invention permet d'amortir une éventuelle surpression lors du remplissage du réservoir en nouveau produit de revêtement.

Selon des aspects avantageux de l'invention, le dispositif incorpore une ou plusieurs des caractéristiques suivantes :
- Le module est intégré dans un ensemble destiné à être disposé entre une extrémité de la tige et la face arrière du piston. Dans ce cas, cet ensemble comprend avantageusement un premier élément de réception de l'extrémité de la tige et un second élément apte à coopérer avec la face arrière du piston, le module élastiquement déformable étant disposé entre ces premier et second éléments. On peut prévoir que ces premier et second éléments sont reliés par une liaison mécanique à débattement qui peut être formée par une tige pourvue d'une tête reçue avec jeu dans un logement de l'un des éléments précités et solidaire de l'autre élément.
- Le module élastiquement déformable est formé par un empilement de rondelles Belleville. Dans ce cas, on peut prévoir que ces rondelles sont disposées entre les premier et second éléments précités, autour de la tige précitée.
- Le module élastiquement déformable peut également être formé d'un bloc de matériau élastiquement déformable en compression tel qu'un élastomère. Bien entendu d'autres matériaux peuvent être envisagés.
- La constante de raideur du module élastiquement déformable est suffisante pour qu'il soit rigide au cours des phases de projection. Ceci permet un pilotage précis du débit de produit en cours de projection.

L'invention sera mieux comprise et d'autres avantages de celle-ci apparaîtront plus clairement à la lumière de la description qui va suivre d'un mode de réalisation d'un dispositif de projection de produit de revêtement conforme à son principe, donnée uniquement à titre d'exemple et faite en référence aux dessins annexés dans lesquels :
- La figure 1 est une coupe longitudinale de principe d'un dispositif conforme à l'invention et
- La figure 2 est une vue à plus grande échelle du détail II à la figure 1.

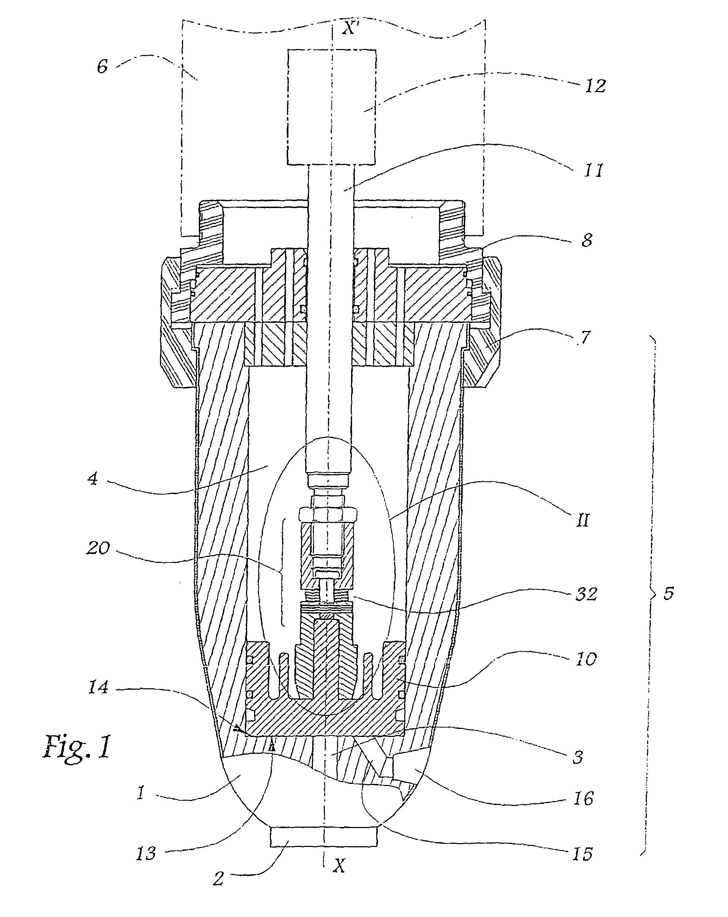

Le dispositif de la figure 1 est destiné à être monté à l'extrémité du bras du robot. Ils comprend un projecteur rotatif de produit de revêtement 1 muni d'un bol de pulvérisation 2 entraîné en rotation par le rotor d'une turbine à air non représentée.

Le projecteur 1 est alimenté en produit de revêtement par un conduit 3 relié à un réservoir 4. Le projecteur 1 et le réservoir 4 sont intégrés dans un sous-ensemble 5 prévu pour être monté à l'extrémité 6 du bras d'un robot multi-axes, non représenté, grâce à une bague 7 coopérant avec un support 8 monté sur l'extrémité 6.

Un piston 10 est prévu pour pousser le produit de revêtement contenu dans le réservoir 4 en direction du conduit 3 lors des phases d'utilisation du projecteur 1. Le piston 10 est commandé en déplacement par une tige 11 entraînée en translation selon un axe central XX' du dispositif grâce à un actionneur 12 qui peut être de tout type connu, par exemple un vérin électrique ou pneumatique ou un moteur pas à pas.

Au terme d'une opération de revêtement, c'est-à-dire lorsque l'essentiel du produit contenu dans le réservoir 4 a été consommé, le sous-ensemble 5 est dirigé vers une station de nettoyage remplissage où le réservoir 4 est purgé en déplaçant le piston 10 jusqu'à ce que la face avant 13 vienne en appui contre le fond 14 du réservoir 4 dans lequel est ménagé l'orifice d'entrée du conduit 3.

Le fond 14 est également percé d'un orifice de sortie d'un canal 15 relié à une vanne 16 prévue pour être connectée à une alimentation en produit de nettoyage et/ou en nouveau produit de revêtement.

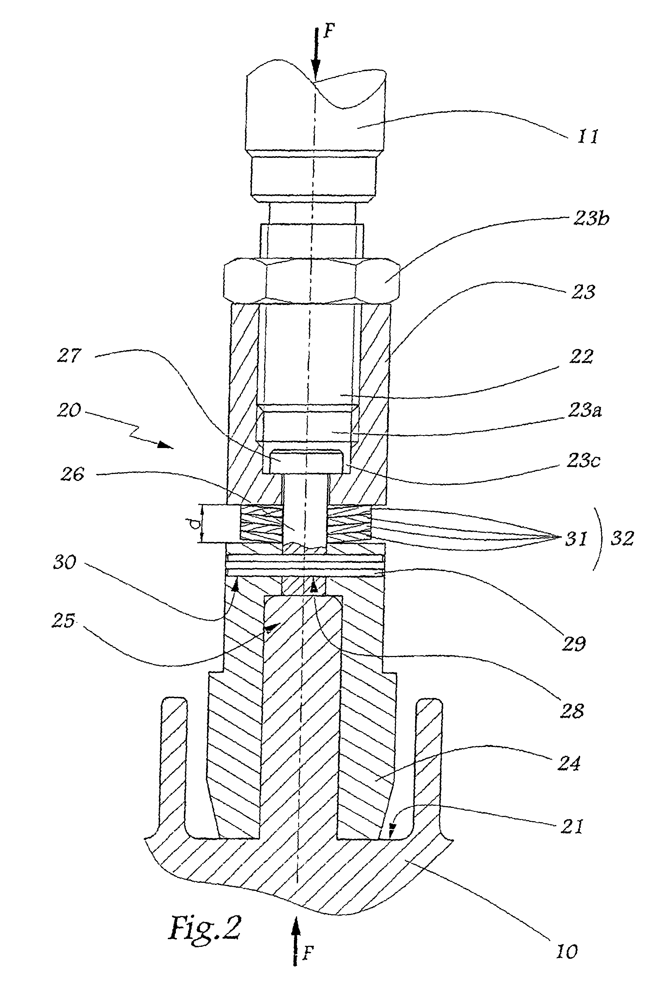

Dans la configuration représentée à la figure 1 où le piston 10 est plaqué contre le fond 14, un produit de nettoyage peut être injecté sous pression à l'intérieur du réservoir 4 par l'intermédiaire du canal 15, en lèchant la face avant 13 du piston 10 grâce à l'élasticité obtenue par un dispositif plus particulièrement visible à la figure 2.

Ce dispositif comprend un connecteur 20 prévu pour être intercalé entre la face arrière 21 du piston 10 et l'extrémité avant 22 de la tige 11. Ce connecteur comprend un manchon 23 dont l'alésage central 23a est taraudé alors que l'extrémité 22 est fileté avec un pas identique à celui de l'alésage 23, cette extrémité pouvant donc être vissée dans ce manchon et immobilisée grâce à un contre-écrou 23b.

Le connecteur 20 comprend également un second manchon 24 prévu pour coiffer une saillie centrale 25 de la face arrière 21 du piston 10, une immobilisation relative des pièces 10 et 24 étant obtenue par coopération de formes. La forme des éléments 24 et 25 favorise le guidage en translation du piston 10.

D'autres géométries peuvent être prévues pour les éléments 23 et 24 qui sont respectivement adaptés à la tige 11 et au piston 10. En particulier, le manchon 24 peut être remplacé par un élément en forme de tige en appui par un contact plan sur la face 21.

Les manchons 23 et 24 sont reliés grâce à un goujon 26 pourvu d'une tête 27 reçue dans la partie de fond 23c de l'alésage 23a non occupée par l'extrémité 22. Du côté opposé à sa tête 27, le goujon 26 est percé d'un orifice 28 de passage d'une goupille élastique 29 traversant également un perçage transversal 30 du manchon 24.

Autour du goujon 26 et entre les manchons 23 et 24 sont disposés quatre rondelles Belleville 31 formant un empilement 32 susceptible de se déformer en compression, de telle sorte que la distance d entre les surfaces en regard des manchons 23 et 24 peut être diminuée sous l'effet d'un effort de compression représenté par les flèches F à la figure 2.

Ainsi, lors de l'introduction sous pression du produit de nettoyage dans le réservoir 4 contre la face avant 13 du piston 10, le piston recule d'une course correspondant à la réduction de la distance d dûe au caractère élastiquement déformable de l'empilement 32.

Ceci permet un nettoyage de la face avant 13 sous l'effet de l'écoulement tourbillonnant du produit de nettoyage. Lorsque ce nettoyage est terminé, la tige 11 est déplacée par l'actionneur 12 dans un sens de retrait du piston 10 alors que le réservoir 4 est rempli en nouveau produit de revêtement.

Ensuite, le projecteur 1 peut être alimenté en déplaçant le piston 10 au moyen de la tige 11 en direction du fond 14 du réservoir 4. Lors des opérations de projection, la pression régnant dans le réservoir 4 est sensiblement inférieure à la pression d'injection du produit de revêtement et la rigidité de l'empilement 32 est choisie suffisante pour que cet empilement soit rigide lorsqu'il est soumis à la pression régnant dans le réservoir au cours des phases de projection. En d'autres termes, l'entraînement du piston 10 grâce à la tige 11 est précis lors des phases de projection car l'empilement 32 est rigide dans ces conditions.

En revanche, en cas de surpression lors de l'injection de produit de nettoyage ou de nouveau produit de revêtement, l'empilement 31 peut servir de tampon entre le piston 10 et la tige 11, ce qui permet de limiter les risques d'endommagement accidentels de l'actionneur 12.

Selon une variante non représentée de l'invention, les rondelles Belleville 31 peuvent être remplacées par un bloc de matériau élastiquement déformable, tel qu'un bloc d'élastomère et plus généralement un bloc de matériau plastique ou de tout autre matériau adapté.

Selon une autre variante non représentée de l'invention, le module élastiquement déformable constitué par l'empilement 32 ou un bloc d'élastomère peut être disposé à l'extrémité opposée à l'extrémité 22, c'est-à-dire entre la tige 11 et l'actionneur 12.

L'invention a été représentée avec un projecteur de produits de revêtement de type rotatif. Elle est cependant applicable avec tout type de projecteur, rotatif ou non, électrostatique ou non.

L'invention a été représentée avec un réservoir alimenté en produit de nettoyage et en nouveau produit de revêtement par un seul canal. Elle serait applicable avec deux ou plus de deux canaux utilisés pour cette alimentation.

## Revendications

1. Dispositif de projection de produit de revêtement comprenant au moins un projecteur (1) et un réservoir (4) à piston (10), ledit piston (10) étant commandé en déplacement par une tige d'actionnement (11) alors que le fond (14) dudit réservoir est relié par au moins un canal (15) à une alimentation (16) en produit de nettoyage et/ou en nouveau produit, **caractérisé en ce qu'**il comprend un module (32), élastiquement déformable en compression (F), intégré dans la liaison cinématique (20) entre ladite tige (11) et ledit piston (10) ou entre ladite tige (11) et ses moyens d'entraînement (12), ledit module permettant un mouvement de recul dudit piston (10) lors de l'introduction de produit dans ledit réservoir à partir dudit canal (15) et en direction de la face avant (13) dudit piston (10).

2. Dispositif selon la revendication 1, **caractérisé en ce que** ledit module (32) est intégré dans un ensemble (20) destiné à être disposé entre une extrémité (22) de ladite tige (11) et la face arrière (21) dudit piston (10).

3. Dispositif selon la revendication 2, **caractérisé en ce que** ledit ensemble (20) comprend un premier élément (23) de réception de ladite extrémité (22) et un second élément (24) apte à coopérer avec ladite face arrière (21, 25) dudit piston (10), ledit module élastiquement déformable (32) étant disposé entre lesdits premier et second éléments (23, 24).

4. Dispositif selon la revendication 3, **caractérisé en ce que** lesdits premier et second éléments (23, 24) sont reliés par une liaison mécanique à débattement (23a, 23c, 26-30).

5. Dispositif selon la revendication 4, **caractérisé en ce que** ladite liaison mécanique à débattement comprend une tige (26) pourvue d'une tête (27) reçue avec jeu dans un logement (23a, 23c) de l'un (23) desdits éléments et solidaire (28-30) de l'autre élément (24).

6. Dispositif selon la revendication 1, **caractérisé en ce que** ledit module élastiquement déformable (32) est disposé entre ladite tige (11) et ses moyens d'entraînement (12).

7. Dispositif selon l'une des revendications précédentes, **caractérisé en ce que** ledit module élastiquement déformable (32) est formé par un empilement de rondelles Belleville (31).

8. Dispositif selon les revendications 5 et 7, **caractérisé en ce que** lesdites rondelles Belleville (31) sont disposées entre lesdits premier et second éléments (23, 24), autour de ladite tige (26).

9. Dispositif selon l'une des revendications 1 à 6, **caractérisé en ce que** ledit module élastiquement déformable est formé d'un bloc de matériau élastiquement déformable en compression (F), notamment d'élastomère.

10. Dispositif selon l'une des revendications précédentes, **caractérisé en ce que** la constante de raideur dudit mpdule (32) est suffisante pour que ledit module soit rigide au cours des phases de projection dudit produit.

## Patentansprüche

1. Sprühvorrichtung für Beschichtungsmittel mit mindestens einer Sprühdüse (1) und einem Kolbenspeicher (4, 10), wobei der Kolben (10) bezüglich der Verschiebung durch eine Betätigungsstange (11) gesteuert wird, während der Boden (14) des Speichers durch mindestens einen Kanal (15) mit einer Versorgung (16) an Reinigungsmittel und/oder neuem Mittel angeschlossen ist, **dadurch gekennzeichnet, dass** sie ein Modul (32) umfasst, das auf Druck (F) elastisch verformbar ist und in die Elementenpaare (20) zwischen dem Stab (11) und dem Kolben (10) oder zwischen dem Stab (11) und seinen Antriebsmitteln (12) integriert ist, wobei das Modul eine Rückbewegung des Kolbens (10) während der Einführung von Mittel in den Speicher aus dem Kanal (15) und in Richtung der vorderen Fläche (13) des Kolbens (10) erlaubt.

2. Sprühvorrichtung nach Anspruch 1, **dadurch gekennzeichnet, dass** das Modul (32) in eine Anordnung (20) integriert ist, die vorgesehen ist, um zwischen ein Ende (22) des Stabes (11) und der Rückfläche (21) des Kolbens (10) angeordnet zu werden.

3. Sprühvorrichtung nach Anspruch 2, **dadurch gekennzeichnet, dass** die Anordnung (20) ein erstes Aufnahmeelement (23) des Endes (22) und ein zweites Element (24) umfasst, das für eine Kooperation mit der Rückfläche (21, 25) des Kolbens (10) geeignet ist, wobei das elastisch verformbare Modul (32) zwischen dem ersten und dem zweiten Element (23, 24) angeordnet ist.

4. Sprühvorrichtung nach Anspruch 3, **dadurch gekennzeichnet, dass** das erste und zweite Element (23, 24) durch eine verschiebbare mechanische Verbindung (23a, 23c, 26 - 30) verbunden sind.

5. Sprühvorrichtung nach Anspruch 4, **dadurch gekennzeichnet, dass** die verschiebbare mechanische Verbindung einen mit einem Kopf (27) versehenen Stift (26) umfasst, der mit Spiel in einer Aufnahme (23a, 23c) eines (23) der Elemente aufgenommen ist und fest (28 - 30) mit dem anderen Element (24) verbunden ist.

6. Sprühvorrichtung nach Anspruch 1, **dadurch gekennzeichnet, dass** das elastisch deformierbare Modul (32) zwischen dem Stab (11) und seinen Antriebsmitteln (12) angeordnet ist.

7. Sprühvorrichtung nach einem der vorhergehenden Ansprüche, **dadurch gekennzeichnet, dass** das elastisch verformbare Modul (32) durch einen Stapel von Belleville-Dichtungsringen (31) gebildet wird.

8. Sprühvorrichtung nach den Ansprüchen 5 und 7, **dadurch gekennzeichnet, dass** die Belleville-Dichtungsringe (31) zwischen dem ersten und zweiten Element (23, 24) um den Stab (26) herum angeordnet sind.

9. Sprühvorrichtung nach einem der Ansprüche 1 bis 6, **dadurch gekennzeichnet, dass** das elastisch verformbare Modul aus einem Block aus einem auf Druck (F) elastisch verformbaren Material, insbesondere aus Elastomer hergestellt ist.

10. Sprühvorrichtung nach einem der vorhergehenden Ansprüche, **dadurch gekennzeichnet, dass** die Steifigkeitskonstante des Moduls (32) ausreichend ist, damit das Modul während der Sprühphasen des Mittels starr ist.

## Claims

1. Device for spraying a coating product comprising at least a sprayer (1) and a reservoir (4) fitted with a piston (10), the movement of the said piston (10) being controlled by an actuating rod (11), whilst the base (14) of the said reservoir is connected by at least one channel (15) to a feed (16) for cleaning product and/or fresh product, **characterised in that** it comprises a module (32), which is elastically deformable under compression (F), integrated in the kinematic link (20) between the said rod (11) and the said piston (10) or between the said rod (11) and its drive means (12), this module enabling a backward movement of the said piston (10) during the introduction of product into the said reservoir from the said channel (15) and towards the front face (13) of the said piston (10).

2. Device according to Claim 1, **characterised in that** the said module (32) is integrated in a unit (20) intended to be arranged between one end (22) of the said rod (11) and the rear face (21) of the said piston (10).

3. Device according to Claim 2, **characterised in that** the said unit (20) advantageously comprises a first element (23) for accommodating the said end (22) and a second element (24) able to interact with the said rear face (21, 25) of the said piston (10), the elastically deformable module (32) being arranged between the said first and second elements (23, 24).

4. Device according to Claim 3, **characterised in that** the said first and second elements (23, 24) are connected by a mechanical link capable of deflection (23a, 23c, 26-30).

5. Device according to Claim 4, **characterised in that** the said mechanical link capable of deflection comprises a rod (26) provided with a head (27) accommodated with play in a seat (23a, 23c) in one (23) of the said elements and integral (28-30) with the other element (24).

6. Device according to Claim 1, **characterised in that** the said elastically deformable module (32) is arranged between the said rod (11) and its drive means (12).

7. Device according to one of the preceding claims, **characterised in that** the said elastically deformable module (32) is made up of a stack of Belleville washers (31).

8. Device according to Claims 5 and 7, **characterised in that** the said Belleville washers (31) are arranged between the said first and second elements (23, 24), around the said rod (26).

9. Device according to one of Claims 1 to 6, **characterised in that** the said elastically deformable module is made up of a block of material that is elastically deformable under compression (F), in particular of elastomer.

10. Device according to one of the preceding claims, **characterised in that** the stiffness constant of the said mpdule (sic) (32) is sufficient for the said module to be rigid during the phases of spraying the said product.
